# EUROPEAN PATENT SPECIFICATION

(11) **EP 1 810 771 B1**
(45) Date of publication and mention of the grant of the patent: **05.05.2010**
(21) Application number: 07001126.7
(22) Date of filing: 19.01.2007
(51) Int. Cl.: B23D 61/18, B23D 65/00

(54) **Process for making an annular abrasion bead element for a cutting wire for cutting relatively hard materials**
Verfahren zur Herstellung eines ringförmigen Abrasionsperlenelements für einen Schneidedraht zum Schneiden von relativ harten Materialien
Procédé pour la manufacture d'un elément d'abrasion en forme de pastille pour un fil de coupe pour couper des matériaux relativement durs

(30) Priority: 23.01.2006 IT VR20060016
(43) Date of publication of application: 25.07.2007
(73) Proprietor: Aros S.r.l., 3701 Affi VR (IT)
(72) Inventor: Fioratti, Stefano, 25015 Desenzano Brescia (IT)
(74) Representative: Reniero, Cirillo Silvano

(56) References cited:
- DE-A- 4 310 549
- DE-A1- 19 516 999
- FR-A1- 2 495 535
- GB-A- 2 243 094
- JP-A- 9 295 222
- US-A- 5 314 512

## Description

The present invention relates to a process for making an annular abrasion bead element for a cutting wire for cutting relatively hard materials, such as stone materials.

As is known, for the cutting of stone materials, so-called "bead wires" have been used for some time, in which also the use of diamonds as abrasive material is foreseen. The bead wires are used on machines termed "wire machines" which usually comprise two or more winding pulleys for the bead wire or wires, at least one of the pulleys being motorized. One of the bead wire sections between one winding pulley and the other is brought into contact with the work piece or pieces (usually blocks of marble, granite and the like), and the driving motion between block and wire can be imparted to the bead wire or to the work piece, if use is then made of diamond bead wire, cutting heights can be attained which are clearly higher than those reached by, e. g. large dimension diamond discs, since cutting wires are in general thinner and more precise than the discs and thus ensure a lower energy expenditure, cutting depth being equal.

The conventional diamond wires are in general composed of a high-strength strand steel cable to which the so-called "beads" (diamonds) shaped as rings and having diameter and length on the order of 10 mm are fixed.

For the production of the diamond beads, a mixture of a metallic material in powder (designed to form a bead matrix) and an abrasive material in granules is usually cold-pressed in order to obtain a compact block, called "cold pre-form" in jargon, formed with through hole, for the forcibly inserting therein a substantially cylindrical support element. The block - support element set thus obtained, however, would not be suitable for use as a bead on a cutting wire. The cold pre-form with its support element must then undergo a sintering operation, e. g. a "sintering without hot pressing", called "free-sintering", "isostatic sintering" or "graphite sintering" In jargon.

Sintering without hot pressing is conducted at nearly atmospheric pressure, subjecting the cold pre-form with its metallic support element to one or more heating steps. On the other hand, in the case of isostatic sintering and graphite sintering, the pre-form with its metallic support element is subjected to a pressure compaction step, and possibly to a heating step.

During the sintering step, solid bonds are formed between adjacent granules of the matrix with consequent progressive elimination of air zones between the granules themselves and thus with the reduction of the surface energy of the single granules, so that the mechanical characteristics of the product once sintered are improved.

After the sintering step, a longitudinal through hole is normally formed in the metal support element, preferably a threaded hole, thus obtaining a finished annular element or bead. At this point, a strand metal cable is inserted in the bead thus made, and the wire section with the bead or beads is loaded into an injection mold in which a plastic material is injected and molded at at least each bead, which is thus stably anchored to the steel cable. The inner thread of each bead together with the locking action of the injected plastic material ensures that the bead itself does not rotate with respect to the strand cable during cutting.

The obtainment of a cutting wire according to the above-described technical solutions therefore involves the use of a metal support, which serves only to make the anchoring of the matrix containing the abrasive of each bead to the strand cable, but has no active role in the cutting step.

The use of the metal support element then involves a drilling and possible threading operation, which necessarily lead to additional costs, as well as greater difficulties and longer times for the cutting wire production.

Currently used beads moreover have an inner core, i. e. the metal support element, which in use has no cutting function since once the abrasive external coating is wom the cutting action of the wire begins to decrease, when perhaps most of the other beads are still "active" for cutting.

The presence, then, of the inner metal support element also imposes great caution in carrying out the sintering step(s), since there is the risk that it overly deforms and causes the fracture of the matrix.

FR-2 495 535 discloses a wire which is obtained by alternatively inserting annular bead elements and distance-setting sleeves onto a cable.

DE-195 16 999 discloses a cutting wire provided with bead elements anchored to a cable through a support made of plastic material. Springs are provided as distance-setting means between adjacent bead elements, and a plastic material could be located onto the cable in order to obtain a cover layer for the springs.

DE-43 10 549 discloses a bead provided with grasping means, obtained by forming, in the bead, a thorough opening having a transverse section including: a main circular portion, and one or more petal portions extending from the circular portion. The petal portions are designed to receive a respective strand of a cable.

The main object, therefore, of the present invention is that of providing a process for making an annular abrasion element or bead for a cutting wire for cutting relatively hard materials which does not require the presence of a support element for each bead.

Another object of the present invention is that of providing a process for making an annular abrasion element or bead for a cutting wire for cutting relatively hard materials which ensures a considerable savings of materials with respect to the currently employed methods.

Another object of the present invention is that of providing a process for making an annular abrasion element or bead for a cutting wire for cutting relatively hard materials which can be achieved at competitive costs with respect to currently employed methods.

Another object of the present invention is that providing a process for the production of a cutting wire which can be made in an easier and quicker manner with respect to the methods used up to now.

According to the present invention, a process is provided for making an annular abrasion bead element for a cutting wire for cutting relatively hard materials, comprising the following steps in sequence:
- loading a mixture of metal material powder and abrasive granular material into at least one annular seat of a first mold;
- forming said mixture in said mold, thus obtaining at least one formed annular element with inner through opening (5); and
- sintering each formed annular element to obtain a finished annular abrasion element.
   each seat in said mold being so shaped as to make grasping means in each formed annular element.
   the grasping means being selected from the group including at least one between:
   at least one transverse recess formed at the opening,
   at least one thread formed in the inner through opening.

According to another aspect of the present invention, a process is provided for making a cutting wire for cutting stone materials comprising the following steps in sequence:
- inserting at least one finished annular abrasion element, obtained with a process according to the present invention, on at least one section of a cable;
- prearranging said at least one section of a cable bearing thereon at least one annular element in at least one seat of a second mold and
- molding of at least one plastic material moldable at each finished annular element on said cable so that each annular abrasion element is stably anchored in position to said cable.

According to another aspect of the present invention, a process is provided for making a cutting wire for cutting stone materials comprising the following steps in sequence:
- prearranging at least one finished annular abrasion element obtained with a process according to the present invention in at least one seat of a second mold;
- inserting said at least one section of a cable into said at least one annular abrasion element prearranged in said at least one seat of a second mold; and
- molding of at least one plastic material moldable at each finished annular element on said cable whereby each annular abrasion element is stably anchored in position to said cable.

Further aspects and advantages of the present invention will be better apparent from the following detailed description of several currently preferred embodiments thereof, given by way of non-limiting examples only, with reference to the accompanying drawings, in which;
Figure 1 is a plan view with parts in cross-section of a mold for the obtainment of a cutting wire according to the present invention;
Figure 2 is a plan view of an annular abrasion element according to the present invention;
Figure 3 is a longitudinal section view taken along the trace III-III of Fig. 2;
Figure 4 is a longitudinal cross-section view of a strand metal cable inserted in an annular abrasion element similar to that of Fig. 2;
Figures 5, 6 and 7 are views similar to views 2, 3 and 4, respectively, of another embodiment of annular abrasion element according to the present invention;
Figure 8 is a side view of a cutting wire according to the present invention;
Figure 9 is a side view with cut-away portions of the wire of Fig. 8 coated at the cable portions or lengths between two adjacent annular abrasion elements; and
Figure 10 is a side view with cat-away portions of a cutting wire according to the present invention.

In the drawings, equivalent or similar parts or components were marked with the same reference numerals.

A process for making an annular abrasion element or bead 1 for cutting wires according to the present invention comprises the following sequential steps:
- loading a mixture of powder metal material and abrasive granular material into at least one annular seat of a mold; and
- pressing said mixture in said mold, thereby obtaining at least one annular shaped element with a through opening.

One thus obtains a cold-pressed semifinished or pre-formed element, i. e. an annular element as the seat of the mold is shaped such that the pre-formed element has an inner wall 1a delimiting a preferably longitudinal through opening.

The pre-formed element thus obtained is finally subjected to a sintering process, thus obtaining a finished annular element.

Preferably, the metal powder material is in the form of powder or powder agglomerates. Advantageously, pressing is a cold-pressing.

The sintering process is preferably a sintering process is conducted without hot pressing at about atmospheric pressure.

An annular element or bead 1 obtained with such a process can be anchored to a cable, e. g. a strand metal cable or made of Kevlar or carbon fibers by inserting a finished annular element, obtained with a process according to the present invention, onto a cable section, e. g. a section of a strand metal cable or comprising Kevlar and/or carbon fibers, prearranging the metal cable section bearing thereon at least one annular element in at least one seat of a mold M, and molding at least one moldable plastic material PM at each finished annular element on the metal cable, thereby obtaining a portion of a cutting wire FT.

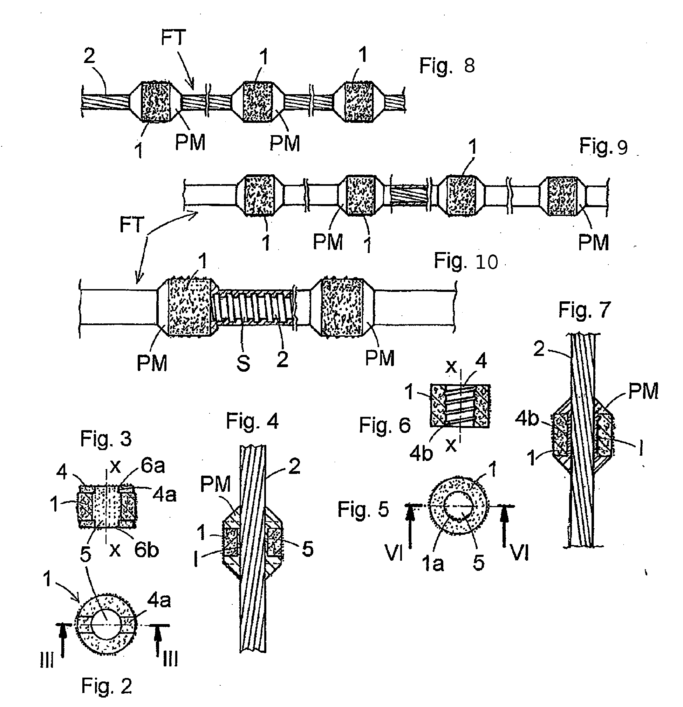

The plastic material will therefore act as bonding agent between each annular element 1 and cable 2, advantageously also being inserted in the air space I delimited between the or each annular element 1 and the cable 2 (Fig. 4).

It is moreover possible to inject a plastic material or the like also in the cable lengths between two adjacent beads, in order to avoid damaging or ruining the cable during the cutting operations.

It is possible to first prearrange the annular elements or beads in a mold and only afterward insert the cable into the annular element or elements in the mold.

Moreover, only nozzles 3a can be foreseen for feeding moldable plastic material at the annular elements, or such nozzles can be foreseen in combination with nozzles 3b for feeding plastic material to the cable lengths between two consecutive annular elements, or there can be one single nozzle for feeding plastic material over the entire cable portion in the mold seat.

Suitable materials as metal material are cobalt, iron, copper, tin, tungsten, titanium, nickel and their alloys, e. g. bronze.

Preferably, the abrasive material comprises granules of at least one component of the group comprising industrial diamond, tungsten carbide, silicon carbide, red-brown corundum, boron nitride, boron carbide.

Suitable materials as the plastic moldable materials are preferably selected from the following: polyacrylate resins, linear polyamides, mixed polyamides and polyamine products, polyamides (PA), polymethacrylamide, polyamidimide, polyarylamide, polyphthalamide, polyetherimide, thermoplastic polyurethane polymers, amorphous polyamides, polybutylone-1, polymethylpentene, styrene polymers, fluoridated polymers, poly(meth)acrylic plastic materials, PMMA (polymethylmethacrylate) molding masses, polycarbonate, polyalkylenterephthalates (PTP), polyarylates, oxides - sulphides (PPS) - linear polyarylic sulphides, modified polyphenylenoxide (PPO), polyarylethers (ketones, polysulfones, PEEK), thermoplastic polyesters (LCP).

To improve anchoring of an annular element 1 to a strand cable and thus to prevent angular movements of the annular element 1 with respect to the cable (which would render useless or less effective the cutting action of the cutting wire), the or each seat in the mold for obtaining a cold preformed element is preferably so shaped as to equip the performed element with grasping means or portions 4.

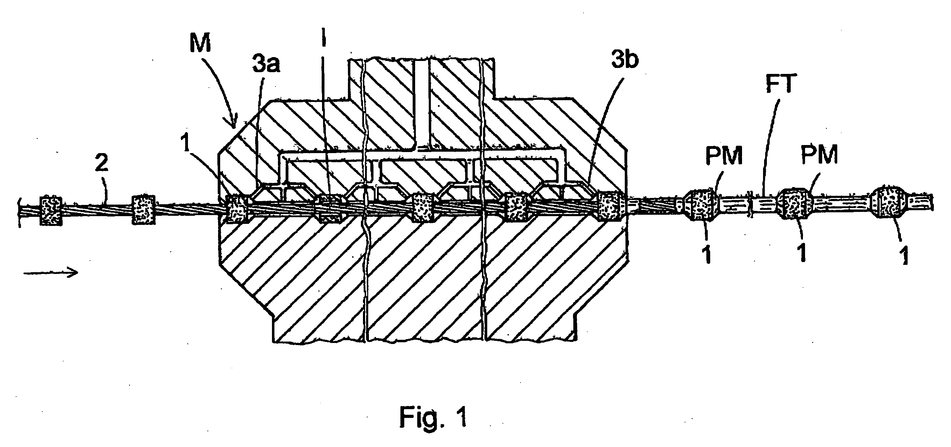

With specific reference to Figures 1-4, annular elements 1 are each illustrated as a body of revolution about the axis x-x having a longitudinal through opening or hole 5 and having one or more transverse recesses 4a each radially extending with respect to the axis x-x,

Preferably, each annular element delimits four notches 4a, two at one end or mouth 6a of the through hole 5 and two at the other end or mouth 6b of the through hole 5. More preferably, the two recesses at each mouth extend substantially symmetric with respect to a plane containing the axis x -x.
With reference to Figures 5 to 7, annular element 1 is illustrated which has as its grasping portion a threaded inner wall 4b of the annular element 1 delimiting the through hole 5.

Thus, a cutting wire according to the present invention comprises a cable, preferably a strand metal cable, on which a plurality of diamond beads are anchored (Fig. 8), which can be coated (Fig. 9) or not coated (Fig. 8) with plastic material in the wire zones or lengths between two consecutive beads. In order to hold as far as possible, in use, each bead in position, any holding means currently used in connection with conventional cutting wires can be employed, e. g. spacing springs S (Fig. 10), flexible spacers or the like.

### Test results

In order to compare a cutting wire obtained with the process according to the present invention with a conventional cutting wire, a number of tests were carried out whose results are summarized below.

### a) Conventional diamond wire (as a reference)

Material of the blocks: granite;
Wire cutting machine driving the wire: a cutting wire machine driven by an electric motor and of a type available on the market;
Type of cutting wire: wire of conventional type available on the market with 37 beads/meter and an 11 mm bead obtained through isostatic sintering;
Linear speed of the cutting wire for cutting a block of granite having a length of 189 cm: 22 m/s;
Current absorption by the cutting wire machine motor under load: 150/160 amperes;
Cut height in the cut block: 55 cm/hour;
Cut height per hour in the block by the block length : ≈1 m²/hour;
Cutting wire tensioning: the wire was wound on two pulleys and held in traction by applying a pressure of 42.5 bars by means of a suitable tensioning device;
Average cutting wire yield: 200/250 square meters cut.

### b) Diamond wire obtained with a process according to the present invention

Block material: granite;
Cutting wire machine: a wire saw machine driven by an electric motor of a type available on the market;
Cutting wire type: cutting wire with 27 beads/meter each bead being an 11 mm bead obtained through free-sintering with a process according to the present invention;
Linear speed of the wire while cutting a granite block having a length of 180 cm: 22 m/s;
Current absorption by the saw motor under load for driving the cutting wire: 150/170 amperes;
Maximum block cutting speed: 83 cm/hour;
Block height/hour cut per block length: =1.5 m²/hour;
Wire tensioning: the cutting wire is wound on two pulleys and is maintained in traction by applying a pressure of = 42.5 bars by means of a suitable tensioning device;
Average cutting wire yield: 170/190 square meters cut.

It was found that the cost for obtaining a diamond cutting wire with a process according to the present invention is nearly half that of a conventional diamond wire.

From the above data, it will be noted that a cutting wire according to the process according to the present invention although obtained at a much lower cost nevertheless ensures a higher cutting speed (i. e, a block height per hour cut) even if it has a slightly lower yield with respect to the conventional diamond wires.

A process for obtaining an annular element according to the present invention therefore makes it possible to eliminate the use of a metal support member for the bead and consequently the additional operations which the presence of this support requires, e. g. drilling and threading. Moreover, during the sintering step the annular element can be deformed without the risk of fractures due to undesired deformations of the metal support member. On one hand this leads to clearly lower costs, while on the other it makes the production of an annular element for a diamond cutting wire, and consequently the diamond cutting wire itself much simpler and quicker.

The process for obtaining an annular element as described above is susceptible to numerous modifications and variants within the protection scope as defined by the claims.

## Claims

1. A process for making an annular abrasion bead element for a cutting wire for cutting relatively hard materials, comprising the following sequential steps:
- loading a mixture of metal material powder and abrasive granular material into at least one annular seat of a first mold;
- forming said mixture in said mold, thus obtaining at least one formed annular element with inner through opening (5); and
- sintering each formed annular element to obtain a finished annular abrasive element.
each seat in said mold being so shaped as to make grasping means (4, 4a, 4b, 4c, 4e) in each formed annular element, **characterized in that**
said grasping means are selected from the group including at least one between:
at least one transverse recess (4a) formed at said opening (5),
at least one thread (4b) formed in said inner through opening (5).

2. A process according to claim 1, **characterized in that** said sintering operation is conducted at substantially atmospheric pressure.

3. A process according to claim 1 or 2, **characterized in that** said powder of metal material comprises cobalt, iron, copper, tin, tungsten, titanium, nickel and alloys thereof.

4. A process according to any preceding claim, **characterized in that** said abrasive granular material comprises granules of at least one component of the group formed by industrial diamond, tungsten carbide, silicon carbide, red-brown corundum, boron nitride, boron carbide.

5. A process according to any previous claim, **characterized in that** said grasping means comprises at least one longitudinal slot (4c) formed in said inner through opening (5).

6. A process according to any previous claim, **characterized in that** said grasping means comprises at least said inner through opening (5) being polygonal in cross section (4e).

7. A process according to any previous claim, **characterized in that** said grasping means comprises at least said inner through opening (5) being elliptical in cross section.

8. An annular abrasion bead element for a cutting wire for cutting relatively hard materials, comprising:
- an annular element formed with an inner through opening (5), which is made of a mixture of metal material powder and abrasive granular material; and
- grasping means;
**characterized in that** said grasping means are selected from the group including at least one among:
at least one transverse recess (4a) formed at said opening (5),
at least one thread (4b) formed in said inner through opening (5).

9. A process for making a cutting wire for stone materials, comprising the following sequential steps:
- inserting at least one finished annular abrasion element (1), obtained with a process according to any one of the claims 1 to 7, on at least one cable section (2);
- prearranging said at least one cable section (2) bearing thereon at least one annular abrasion element (1) in at least one seat of a second mold (M); and
- carrying out the molding of at least one moldable plastic material at each finished annular abrasion element on said cable (2) whereby each annular abrasion element is stably anchored in position to said cable (2).

10. A process for making a cutting wire for stone materials, comprising the following sequential steps:
- prearranging at least one finished annular abrasion element (1) obtained with a process according to any one of the claims 1 to 7, in at least one seat in a second mold (S);
- inserting said at least one cable (2) into said at least one annular abrasion element (1) prearranged in said at least one seat in said second mold; and
- carrying out the molding of at least one moldable plastic material at each annular abrasion element on said cable, whereby each annular element is stably anchored in position to said cable (2).

11. A process according to claim 10, **characterized in that** said cable is a strand metal cable.

12. A process according to claim 10, **characterized in that** said cable comprises Kevlar and/or carbon fibers.

13. A process according to any claim 10 to 12, **characterized in that** said molding is an injection molding so that said at least one plastic material is forced to penetrate between each annular abrasion element (1) and said cable (2).

14. A process according to any claim 10 to 13, **characterized in that** said at least one plastic material is molded thereby covering the entire section of a cable between one annular abrasion element and another.

15. A process according to any claim 10 to 14, **characterized in that** said plastic material is selected from the group comprising polyacrylate resins, linear polyamides, mixed polyamides and polyamine products, polyamides (PA), polymethacrylamide, polyamidimide, polyarylamide, polyphthalamide, polyetherimide, thermoplastic polyurethane polymers, amorphous polyamides, polybutylene-1, polymethylpentene, styrene polymers, fluoridated polymers, poly(meth)acrylic plastic materials, PMMA (polymethylmethacrylate) molding masses, polycarbonate, polyalkylenterephthalates (PTP), polyarylates, oxides - sulphides (PPS) - linear polyarylic sulphides, modified polyphenylenoxide (PPO), polyarylethers (ketones, polysulfones, PEEK), thermoplastic polyesters (LCP).

16. A cutting wire comprising at least one cable section (2) bearing thereon at least one bead element as claimed in claim 8.

## Patentansprüche

1. Verfahren zum Herstellen eines ringförmigen Abrasionsperlenelements für einen Schneiddraht zum Schneiden relativ harter Materialien, mit den sequentiellen Schritten:
- Einbringen eines Gemischs aus einem Metallmaterialpulver und einem abrasiven körnigen Material in mindestens einer ringförmigen Aufnahme einer ersten Form;
- Formen des Gemischs in der Form zum Erzeugen mindestens eines geformten ringförmigen Elements mit einer inneren Durchgangsöffnung (5); und
- Sintern jedes geformten ringförmigen Elements zum Erzeugen eines endgefertigten ringförmigen Abrasionselements,
- wobei jede Aufnahme in der Form derart geformt ist, dass in jedem geformten ringförmigen Element eine Halteeinrichtung (4, 4a, 4b, 4c, 4e) ausgebildet wird,
**dadurch gekennzeichnet, dass**
die Halteeinrichtung ausgewählt wird aus:
mindestens einer an der Öffnung (5) ausgebildeten Quervertiefung (4a); und/oder
mindestens einem in der inneren Durchgangsöffnung (5) ausgebildeten Gewinde (4b).

2. Verfahren nach Anspruch 1, **dadurch gekennzeichnet, dass** der Sinterprozess im Wesentlichen bei Atmosphärendruck ausgeführt wird.

3. Verfahren nach Anspruch 1 oder 2, **dadurch gekennzeichnet, dass** das Metallmaterialpulver Kobalt, Eisen, Kupfer, Zinn, Wolfram, Titan, Nickel und Legierungen davon enthält.

4. Verfahren nach einem der vorangehenden Ansprüche, **dadurch gekennzeichnet, dass** das abrasive körnige Material Körner von mindestens einer Komponente aus der Gruppe aufweist, die Industriediamant, Wolframkarbid, Siliziumkarbid, rotbraunem Korund, Bornitrid und Borkarbid bilden.

5. Verfahren nach einem der vorangehenden Ansprüche, **dadurch gekennzeichnet, dass** die Halteeinrichtung mindestens einen in der inneren Durchgangsöffnung (5) ausgebildeten Längsschlitz (4c) aufweist.

6. Verfahren nach einem der vorangehenden Ansprüche, **dadurch gekennzeichnet, dass** die Halteeinrichtung mindestens die innere Durchgangsöffnung (5) mit einem polygonalen Querschnitt aufweist.

7. Verfahren nach einem der vorangehenden Ansprüche, **dadurch gekennzeichnet, dass** die Halteeinrichtung mindestens die innere Durchgangsöffnung (5) mit einem elliptischen Querschnitt aufweist.

8. Ringförmiges Abrasionsperlenelement für einen Schneiddraht zum Schneiden relativ harter Materialien, mit:
- einem ringförmigen Element, in dem eine innere Durchgangsöffnung (5) ausgebildet ist und das aus einem Gemisch aus einem Metallmaterialpulver und einem abrasiven körnigen Material hergestellt ist; und
- einer Halteeinrichtung;
**dadurch gekennzeichnet, dass**
die Halteeinrichtung ausgewählt wird aus mindestens einer an der Öffnung (5) ausgebildeten, sich quer erstreckenden Vertiefung (4a), und/oder
mindestens einem in der inneren Durchgangsöffnung (5) ausgebildeten Gewinde (4b).

9. Verfahren zum Herstellen eines Schneiddrahtes für Steinmaterialien, mit den sequentiellen Schritten:
- Einsetzen mindestens eines endgefertigten ringförmigen Abrasionselements (1), das durch ein Verfahren nach einem der Ansprüche 1 bis 7 erhalten wurde, auf mindestens einem Seil- bzw. Kabel- bzw. Strangabschnitt (2);
- Vorabanordnen des mindestens einen Seilabschnitts (2), auf dem mindestens ein ringförmiges Abrasionselement (1) gehalten wird, in mindestens einer Aufnahme einer zweiten Form (M); und
- Ausführen eines Gießprozesses von mindestens einem gießbaren Kunststoffmaterial an jedem endgefertigten ringförmigen Abrasionselement auf dem Seil (2), wodurch jedes ringförmige Abrasionselement am Seil (2) stabil in Position verankert wird.

10. Verfahren zum Herstellen eines Schneiddrahtes für Steinmaterialien, mit den sequentiellen Schritten:
- Vorabanordnen mindestens eines endgefertigten ringförmigen Abrasionselements (1), das durch ein Verfahren nach einem der Ansprüche 1 bis 7 erhalten wurde, in mindestens einer Aufnahme einer zweiten Form (S);
- Einsetzen des mindestens einen Seils (2) in das mindestens eine ringförmige Abrasionselement (1), das in der mindestens einen Aufnahme der zweiten Form angeordnet ist; und
- Ausführen eines Gießprozesses von mindestens einem gießbaren Kunststoffmaterial an jedem ringförmigen Abrasionselement auf dem Seil (2), wodurch jedes ringförmige Abrasionselement am Seil (2) stabil in Position verankert wird.

11. Verfahren nach Anspruch 10, **dadurch gekennzeichnet, dass** das Seil ein Drahtseil ist.

12. Verfahren nach Anspruch 10, **dadurch gekennzeichnet, dass** das Seil Kevlar- und/oder Kohlenstofffasern enthält.

13. Verfahren nach einem der Ansprüche 10 bis 12, **dadurch gekennzeichnet, dass** der Gießprozess ein Spritzgießprozess ist, so dass das mindestens eine Kunststoffmaterial dazu gezwungen wird, zwischen jedes ringförmige Abrasionselement (1) und das Seil (2) einzudringen.

14. Verfahren nach einem der Ansprüche 10 bis 13, **dadurch gekennzeichnet, dass** das mindestens eine Kunststoffmaterial derart gegossen wird, dass es den gesamten Abschnitt eines Seils zwischen einem ringförmigen Abrasionselement und einem anderen bedeckt.

15. Verfahren nach einem der Ansprüche 10 bis 14, **dadurch gekennzeichnet, dass** das Kunststoffmaterial ausgewählt wird aus der Gruppe umfassend Polyacrylatharzen, linearen Polyamiden, Polyamid- und Polyamin-Mischprodukten, Polyamiden (PA), Polymethacrylamid, Polyamidimid, Polyarylamid, Polyphthalamid, Polyetherimid, thermoplastischen Polyurethanpolymeren, amorphen Polyamiden, Polybutylen-1, Polymethylpenten, Styrolpolymeren, fluorierten Polymeren, Poly(meth)acryl-Kunststoffmaterialien, PMMA- (Polymethylmethacrylat) Gußmassen, Polycarbonat, Polyalkylenterephthalaten (PTP), Polyarylaten, Oxiden-Sulfiden(PPS)-linearen Polyarylsulfiden, modifiziertem Polyphenylenoxid (PPO), Polyarylethern (-keto-nen, -polysulfonen, PEEK) und thermoplastischen Polyestern (LCP).

16. Schneiddraht mit mindestens einem Seilabschnitt (2), auf dem mindestens ein Perlenelement nach Anspruch 8 gehalten wird.

## Revendications

1. Procédé de fabrication d'un élément d'abrasion annulaire en forme de perles, pour un fil de coupe, pour couper des matériaux relativement durs, comprenant les étapes séquentielles suivantes :
- chargement d'un mélange de poudre de matériau métallique et de matériau granulaire abrasif dans au moins un siège annulaire d'un premier moule ;
- formage dudit mélange dans ledit moule, obtenant ainsi au moins un élément annulaire formé ayant une ouverture intérieure (5) traversante ; et
- frittage de chaque élément annulaire formé, pour obtenir un élément abrasif annulaire achevé,
chaque siège dans ledit moule étant conformé pour constituer des moyens de saisie (4, 4a, 4b, 4c, 4e) dans chaque élément annulaire formé,
**caractérisé en ce que** lesdits moyens de saisie sont sélectionnés dans le groupe comprenant au moins l'un, parmi :
au moins une cavité transversale (4a) formée sur ladite ouverture (5),
au moins un fil (4b) formé dans ladite ouverture intérieure (5) traversante.

2. Procédé selon la revendication 1, **caractérisé en ce que** ladite opération de frittage est effectuée sensiblement à la pression atmosphérique.

3. Procédé selon la revendication 1 ou 2, **caractérisé en ce que** ladite poudre de matériau métallique comprend du cobalt, fer, cuivre, étain, tungstène, titane, nickel et leurs alliages.

4. Procédé selon l'une quelconque des revendications précédentes, **caractérisé en ce que** ledit matériau granulaire abrasif comprend des granulés d'au moins un composant du groupe formé par le diamant industriel, carbure de tungstène, carbure de silicium, corindon rouge-brun, nitrure de bore, carbure de bore.

5. Procédé selon l'une quelconque des revendications précédentes, **caractérisé en ce que** lesdits moyens de saisie comprennent au moins une fente (4c) longitudinale, formée dans ladite ouverture intérieure (5) traversante.

6. Procédé selon l'une quelconque des revendications précédentes, **caractérisé en ce que** lesdits moyens de saisie comprennent au moins ladite ouverture intérieure (5) traversante, de section transversale (4a) polygonale.

7. Procédé selon l'une des revendications précédentes, **caractérisé en ce que** lesdits moyens de saisie comprennent au moins ladite ouverture intérieure (5) traversante, de section transversale elliptique.

8. Elément d'abrasion annulaire en forme de perles, pour un fil de coupe, pour couper des matériaux relativement durs, comprenant :
- un élément annulaire formé avec une ouverture intérieure (5) traversante ; composé d'un mélange de poudre de matériau métallique et de matériau granulaire abrasif ; et
- des moyens de saisie ;
**caractérisé en ce que** lesdits moyens de saisie sont sélectionnés dans le groupe comprenant au moins, parmi d'autres :
au moins une cavité transversale (4a) formée à l'emplacement de ladite ouverture (5),
au moins un fil (4b), formé dans ladite ouverture intérieure (5) traversante.

9. Procédé de fabrication d'un fil de coupe pour des matériaux rocheux, comprenant les étapes séquentielles suivantes :
- insertion d'au moins un élément d'abrasion annulaire (1) achevé, obtenu avec un procédé selon l'une quelconque des revendications 1 à 7, sur au moins une section de câble (2) ;
- préagencement de ladite au moins une section de câble (2), portant sur elle au moins un élément d'abrasion annulaire (1) dans au moins un siège d'un deuxième moule (M) ; et
- accomplissement du moulage d'au moins une matière plastique moulable à chaque élément d'abrasion annulaire achevé sur ledit câble (2), de manière que chaque élément d'abrasion annulaire soit ancré de manière stable, en position, sur ledit câble (2).

10. Procédé de fabrication d'un fil de coupe pour des matériaux rocheux, comprenant les étapes séquentielles suivantes :
- préagencement d'au moins un élément d'abrasion annulaire (1) achevé, obtenu avec un procédé selon l'une quelconque des revendications 1 à 7, dans au moins un siège dans un deuxième moule (S);
- insertion dudit au moins un câble (2), dans ledit au moins un élément d'abrasion annulaire (1) préagencé dans ledit au ions un siège dans ledit deuxième moule ; et
- accomplissement du moulage d'au moins une matière plastique moulable à chaque élément d'abrasion annulaire sur ledit câble, de manière que chaque élément annulaire soit ancré de manière stable, en position, sur ledit câble (2).

11. Procédé selon la revendication 10, **caractérisé en ce que** ledit câble est un câble métallique commis ou assemblé.

12. Procédé selon la revendication 10, **caractérisé en ce que** ledit câble comprend des fibres en Kevlar et/ou en carbone.

13. Procédé selon l'une quelconque des revendications 10 à 12, **caractérisé en ce que** ledit moulage est un moulage par injection, de manière que ladite au moins une matière plastique soit forcée à pénétrer entre chaque élément d'abrasion (1) annulaire et ledit câble (2).

14. Procédé selon l'une quelconque des revendications 10 à 13, **caractérisé en ce que** ladite au moins une matière plastique est moulée de manière à couvrir la section entière d'un câble, entre un élément d'abrasion annulaire et un autre.

15. Procédé selon l'une quelconque des revendications 10 à 14, **caractérisé en ce que** ladite matière plastique est sélectionnée dans le groupe comprenant les résines polyacrylate, polyamide linéaires, polyamides mélangés et produits à base de polyamine, polyamides (PA), polyméthacrylamide, polyamidimide, polyarylamide, polyphtalamide, polyétherimide, polymères polyuréthane thermoplastiques, polymides amorphes, polybutylène-1, polyméthylpentène, polymères styrène, polymères fluorurés, matières plastiques de type poly(méth)acrylique, masses démoulage en PMMA (polyméthylméthacrylate), polycarbonate, polyalkylènetéréphtalates (PTP), sulfures polyaryliques linéaires oxydes-sulfures (PPS), polyphénylèneoxyde (PPO) modifié, polyaryléthers (cétones, polysulfones, PEEK), polyesters thermoplastiques (LCP).

16. Fil de coupe, comprenant au moins une section de câble (2), portant sur elle au moins un élément en forme de perle, tel que revendiqué à la revendication 8.
